# EUROPÄISCHE PATENTSCHRIFT

(11) **EP 4 077 015 B1**
(45) Veröffentlichungstag und Bekanntmachung des Hinweises auf die Patenterteilung: **12.06.2024**
(21) Anmeldenummer: 20833808.7
(22) Anmeldetag: 17.12.2020
(51) Int. Cl.: B60K 35/00

(54) **VERFAHREN ZUM BETREIBEN EINER ANZEIGEEINHEIT EINES FAHRZEUGS UND ANZEIGEEINHEIT**
METHOD FOR OPERATING A DISPLAY UNIT OF A VEHICLE, AND DISPLAY UNIT
PROCÉDÉ DE FONCTIONNEMENT D'UNE UNITÉ D'AFFICHAGE D'UN VÉHICULE ET UNITÉ D'AFFICHAGE

(30) Priorität: 18.12.2019 DE 102019220012
(43) Veröffentlichungstag der Anmeldung: 26.10.2022
(73) Patentinhaber: Continental Automotive Technologies GmbH, 30175 Hannover (DE)
(72) Erfinder: KABATEK, Ulrich, 65824 Schwalbach a. Ts. (DE); HOHMANN, Kai, 65824 Schwalbach a. Ts. (DE)
(74) Vertreter: Continental Corporation
(86) Internationale Anmeldenummer: PCT/EP2020/086638
(87) Internationale Veröffentlichungsnummer: WO 2021/122891

(56) Entgegenhaltungen:
- DE-A1-102012 019 507
- DE-A1-102012 020 170
- DE-A1-102012 206 030
- DE-A1-102017 213 177
- US-A1- 2014 129 082

## Beschreibung

Die Erfindung betrifft ein Verfahren zum Betreiben einer Anzeigeeinheit eines Fahrzeugs sowie eine Anzeigeeinheit.

Anzeigeeinheiten werden vermehrt in Fahrzeugen zu unterschiedlichsten Funktionen eingesetzt. So dienen sie nicht nur als reines Informationsgerät und Navigationsgerät, sondern auch der Steuerung. Dazu werden die Anzeigeeinheiten immer größer ausgeführt. Entsprechend der Gesamtfläche ist eine große über eine Hintergrundbeleuchtungseinheit zu beleuchtende Anzeigeeinheit vorhanden.

Die DE 103 393 14 B3 offenbart ein Verfahren, bei dem automatisch die aktuelle Blickrichtung des Fahrers fortlaufend detektiert wird und die für den Fahrer fahrtrelevanten Informationen nur dann nahezu verzögerungsfrei angezeigt werden, wenn der Fahrer Blickkontakt mit dem Dual-View-Display hat, wohingegen in den Intervallen ohne Blickkontakt alternativ fahrtunrelevante Informationen angezeigt werden können, wobei die aktuelle Blickrichtung durch eine videobasierte Detektion der Kopfdrehung und/oder Augenbewegung des Fahrers auf der Basis eines statischen oder dynamischen Detektionsverfahrens ermittelt und in der Auswertung nur eine binäre Entscheidung getroffen wird, ob der Fahrer das Dual-View-Display aktuell anblickt oder nicht.

Die DE 10 2017 213 177 A1 betrifft ein Verfahren zum Betreiben eines Bildschirms eines Kraftfahrzeugs, sowie ein Kraftfahrzeug, welches dazu eingerichtet ist, das genannte Verfahren durchzuführen. Die DE 10 2012 020170 A1 betrifft Anzeigevorrichtungen in Kraftfahrzeugen, insbesondere Verfahren zur Steuerung derartiger Anzeigevorrichtungen. Die DE 10 2012 206030 A1 bezieht sich auf ein Verfahren zum Steuern zumindest einer Funktion zumindest eines Anzeigegerätes für einen Innenraum eines Fahrzeugs, auf eine Vorrichtung zum Steuern zumindest einer Funktion zumindest eines Anzeigegerätes für einen Innenraum eines Fahrzeugs und auf ein entsprechendes Computerprogrammprodukt. Aus der DE 10 2012 019507 A1 geht hervor, ein Fahrzeug zu schaffen, bei dem der Fahrer wirksam davor geschützt ist, sicherheitsrelevante Objekte in der Umgebung des Fahrzeugs zu übersehen.

Die US 2014/129082 A1 betrifft eine Vorrichtung zur Steuerung von in Fahrzeugen eingebauten Geräten (Kraftfahrzeuginstrumenten-Bedienvorrichtung), um eine Vielzahl von in Fahrzeugen eingebauten Geräten mit der Blickrichtung eines Fahrzeuginsassen steuerbar zu machen, und eine Anzeigevorrichtung (Warnvorrichtung) zur Anzeige der Blickrichtung des Fahrzeuginsassen.

Es ist eine Aufgabe der Erfindung ein Verfahren und eine Anzeigeeinheit anzugeben, welche einen verbesserten Betrieb des Fahrzeugs ermöglichen. Diese Aufgabe wird durch ein Verfahren mit den Merkmalen des Anspruchs 1 und eine Anzeigeeinheit mit den Merkmalen des Anspruchs 10 gelöst. In den Unteransprüchen sind weitere vorteilhafte Maßnahmen aufgelistet, die beliebig geeignet miteinander kombiniert werden können, um weitere Vorteile zu erzielen.

Ein erfindungsgemäßes Verfahren zum Betreiben einer Anzeigeeinheit eines Fahrzeugs, wobei die Anzeigeeinheit wenigstens eine Anzeige anzeigt, weist folgende Schritte auf:
- Ermitteln der Blickrichtung eines Fahrers durch eine Blickerfassungseinrichtung,
- Prüfen, ob die Blickrichtung des Fahrers auf die Anzeigeeinheit gerichtet ist,
- Prüfen, ob verkehrsrelevante Daten vorliegen,
- Betreiben der Anzeigeeinheit in einem Energiesparmodus, wenn der Blick des Fahrers nicht auf die Anzeigeeinheit gerichtet ist und/oder wenn keine verkehrsrelevanten Daten vorliegen,
- Betreiben der Anzeigeeinheit in einem Anzeigemodus, wenn der Blick des Fahrers auf die Anzeigeeinheit gerichtet ist und/oder wenn verkehrsrelevante Daten zur Anzeige vorliegen.

Das Erfassungssystem kann beispielsweise eine Kamera sein, welche mithilfe beispielsweise einer Steuereinheit die Blickrichtung des Fahrers auswertet. Dadurch kann festgestellt werden, ob der Fahrer auf die Anzeigeeinheit blickt. Dabei kann mit Fahrer auch der Beifahrer umfasst sein.

Die Hintergrundbeleuchtung großer Anzeigeeinheiten erfordert eine erhebliche Menge an Energie. Darüber hinaus wird hier auch unerwünschte Abwärme erzeugt. Zum anderen erfordert die Ansteuerung der Anzeigen auch eine hohe Leistung der entsprechenden Grafikeinheit, welche ebenfalls Abwärme erzeugt.

Durch das erfindungsgemäße Verfahren wird eine Reduktion der Energie/des Stromverbrauches und der Abwärme der Anzeigeeinheit erzielt. Darüber hinaus wird die Anzeigeeinheit weniger stark aufgeheizt, welches einen erheblichen Vorteil hinsichtlich einer möglichen Einbauposition der Anzeigeeinheit mit sich bringt. So wird beispielsweise zusätzlich zur Sonneneinstrahlung lediglich wenig eigene Hitze durch den Betrieb der Anzeigeeinheit erzeugt. Somit kann auch eine höhere Lebensdauer der Anzeigeeinheit erzielt werden.

Durch das erfindungsgemäße Verfahren ist ein sogenanntes Derating bei hoher Temperatur viel später notwendig, da die Eigenerwärmung der Anzeigeeinheit durch den blickrichtungsabhängigen Betrieb wesentlich reduziert wird.

Bei einem Wechsel von dem Anzeigenmodus in den Energiesparmodus wird die Helligkeit der Anzeige reduziert und bei dem Wechsel von dem Energiesparmodus in den Anzeigemodus wird die Helligkeit der Anzeige erhöht. Hierzu kann eine Hintergrundbeleuchtungseinheit gezielt durch Impulsansteuerung (Überströmung) so gesteuert werden, dass bei einer Blickrichtung des Fahrers auf die Anzeigeeinheit und/oder bei einem Vorliegen von verkehrsrelevanten Daten das Hintergrundlicht und damit die Anzeige wesentlich aufgehellt wird, so dass die Ablesbarkeit verbessert wird.

Weiterhin erfindungsgemäß verfügt die Anzeigeeinheit über eine Dimm-Funktion, wobei der Wechsel von dem Energiesparmodus in den Anzeigemodus mittels der Dimm-Funktion stufenlos erfolgt, wenn sich der Blick des Fahrers auf die Anzeigeeinheit richtet. Dies ist vorteilhaft, da eine schlagartige Erhöhung ansonsten als "Bewegung" wahrgenommen werden könnte, die die Aufmerksamkeit oder gar ein Erschrecken des Fahrers hervorrufen kann. Dadurch wird der Fahrer ggf. vom Verkehrsgeschehen abgelenkt oder das Erschrecken kann zu einem "verreißen" des Lenkrads führen. Mit Verreißen ist hierbei gemeint, dass der Fahrer das Lenkrad des Fahrzeuges abrupt dreht, sodass es zu einer Spurabweichung des Fahrzeugs von der ursprünglichen Spur kommt.

Zudem wird die Eigenerwärmung der Anzeigeeinheit durch die blickrichtungsabhängige Dimmung nochmals reduziert.

Weiterhin erfindungsgemäß erfolgt der Wechsel von dem Energiesparmodus in den Anzeigemodus schlagartig, wenn verkehrsrelevante Daten zur Anzeige vorliegen. Dadurch kann die Aufmerksamkeit des Fahrers auf die Anzeigeeinheit gelenkt werden.

Vorzugsweise ist die Art des Wechsels zusätzlich von einer durch Fahrzeugsensoren erfassten Verkehrssituation abhängig; erkennen die Fahrzeugsensoren bzw. die Steuereinheit anhand der von den Fahrzeugsensoren erfassten Verkehrssituation eine kritische Verkehrssituation, so erfolgt ein stufenloser Wechsel von dem Energiesparmodus in den Anzeigemodus mittels der Dimm-Funktion.

Liegt keine kritische Verkehrssituation vor, so kann der Wechsel von dem Energiesparmodus in den Anzeigemodus schlagartig erfolgen, wenn verkehrsrelevante Daten zur Anzeige vorliegen, um somit die Aufmerksamkeit des Fahrers/Beifahrers auf die Anzeigeeinheit zu lenken.

Vorzugsweise umfassen die verkehrsrelevanten Daten eine geänderte Verkehrssituation. Dies kann beispielsweise eine veränderte Verkehrssituation sein, wie eine Baustelle/Stau. In diesem Fall können die verkehrsrelevanten Daten beispielsweise über einen Car-to-X/Car-to-Car Kommunikationskanal empfangen werden. Auch können die Verkehrssituationen beispielsweise die Wetterbedingungen betreffen, beispielsweise bei plötzlich auftretendem Blitzeis.

In weiterer vorzugsweiser Ausgestaltung umfassen die verkehrsrelevanten Daten fahrzeugrelevante Daten. Beispielsweise kann dies eine Information über einen Ölverlust/Bremsflüssigkeitsverlust oder der Ausfall beispielsweise eines Sensors sein.

Vorzugsweise umfassen die verkehrsrelevanten Daten fahrerrelevante Daten. Dies kann beispielsweise eine plötzlich auftretende Müdigkeit des Fahrers sein, welche ebenfalls mit der Blickerfassungseinrichtung erfasst werden kann.

In weiterer bevorzugter Ausgestaltung wird bei der Anzeigeeinheit bei einem Wechsel von dem Anzeigenmodus in den Energiesparmodus die Qualität der Anzeige reduziert und bei dem Wechsel von dem Energiesparmodus in den Anzeigemodus die Qualität der Anzeige erhöht. Dabei kann die Qualität des grafischen Inhaltes reduziert werden, indem z.B. mit einer schlechteren Auflösung "unschärfere" Inhalte erzeugt und entsprechend hochskaliert werden.

Vorzugsweise umfasst die Qualität die Auflösung der Anzeige. Vorzugsweise wird bei der Anzeigeeinheit bei dem Wechsel von dem Anzeigenmodus in den Energiesparmodus als Qualität die Auflösung der Anzeige reduziert, und bei dem Wechsel von dem Energiesparmodus in den Anzeigemodus als Qualität die Auflösung der Anzeige erhöht. Diese Reduzierung ist einfach zu realisieren.

Vorzugsweise umfasst die Qualität die Aktualisierungsrate der Anzeige. Alternativ oder optional ergänzend wird bei der Anzeigeeinheit bei dem Wechsel von dem Anzeigenmodus in den Energiesparmodus als Qualität die Aktualisierungsrate der Anzeige reduziert, und bei dem Wechsel von dem Energiesparmodus in den Anzeigemodus als Qualität die Aktualisierungsrate der Anzeige erhöht. Dabei kann mit Aktualisierungsrate die Aktualisierungsrate des Inhalts der Anzeige verstanden werden. Dies ist ebenfalls einfach zu realisieren.

Vorzugsweise umfasst die Qualität den Kontrast der Anzeige. Weiterhin vorzugsweise wird bei der Anzeigeeinheit bei dem Wechsel von dem Anzeigenmodus in den Energiesparmodus als Qualität der Kontrast der Anzeige reduziert, und bei dem Wechsel von dem Energiesparmodus in den Anzeigemodus als Qualität der Kontrast der Anzeige erhöht. Dies ist ebenfalls einfach zu realisieren.

Ferner wird die Aufgabe gelöst durch eine Anzeigeeinheit für ein Fahrzeug umfassend eine Blickerfassungseinrichtung zum Erfassen der Blickrichtung des Fahrers und eine Steuereinheit zum Prüfen, ob die Blickrichtung des Fahrers auf die Anzeigeeinheit gerichtet ist und ob verkehrsrelevante Daten vorliegen,
wobei die Steuereinheit ferner dazu ausgerichtet ist, wenn der Blick des Fahrers nicht auf die Anzeigeeinheit gerichtet ist und/oder wenn keine verkehrsrelevanten Daten vorliegen, die Anzeigeeinheit in einem Energiesparmodus zu betreiben und die Anzeigeeinheit, wenn der Blick des Fahrers auf die Anzeigeeinheit gerichtet ist und/oder wenn verkehrsrelevante Daten zur Anzeige vorliegen, in einem Anzeigemodus zu betreiben.

Dabei ist die Anzeigeeinheit dazu ausgestaltet, das erfindungsgemäße Verfahren durchzuführen.

Die Steuereinheit kann beispielsweise ein Steuergerät (ECU) sein.

Die Blickerfassungseinrichtung ist insbesondere eine Kamera beispielsweise eine Frontkamera.

Insbesondere in elektrisch betriebenen Fahrzeugen ist der Verbrauch an Energie sowohl für die Hintergrundbeleuchtungseinheit als auch für die Ansteuerung ein Problem. Der Stromverbrauch wirkt sich hier direkt in einer verminderten Reichweite aus. Durch die erfindungsgemäße Anzeigeeinheit wird eine Reduktion der Energie, des Stromverbrauchs und der Abwärme der Anzeigeeinheit erzielt.

Die Anzeigeeinheit umfasst eine Hintergrundbeleuchtungseinheit zur Hintergrundbeleuchtung, wobei die Steuereinheit dazu ausgebildet ist, bei einem Wechsel von dem Anzeigenmodus in den Energiesparmodus die Helligkeit der Hintergrundbeleuchtung zu reduzieren und bei dem Wechsel von dem Energiesparmodus in den Anzeigemodus die Helligkeit der Hintergrundbeleuchtung zu erhöhen.

Weiterhin erfindungsgemäß umfasst die Hintergrundbeleuchtungseinheit einen Dimmregler, wobei die Steuereinheit dazu ausgebildet ist, die Helligkeit der Hintergrundbeleuchtung mittels des Dimmreglers stufenlos zu erhöhen, wenn sich der Blick des Fahrers auf die Anzeigeeinheit richtet.

Somit kann durch die Steuereinheit die Helligkeit der Hintergrundbeleuchtung mittels des Dimmreglers stufenlos reduziert und erhöht werden. Hierbei ist es vorteilhaft, wenn dies nicht schlagartig erfolgt, da dies ansonsten als "Bewegung" wahrgenommen werden könnte, die die Aufmerksamkeit des Fahrers auf die Anzeigeeinheit lenkt und ihn vom Verkehrsgeschehen/der aktuellen Verkehrssituation ablenkt.

Erfindungsgemäß erfolgt der Wechsel von dem Energiesparmodus in den Anzeigemodus schlagartig, wenn verkehrsrelevante Daten zur Anzeige vorliegen.

Vorzugsweise umfassen die verkehrsrelevanten Daten eine geänderte Verkehrssituation und/oder fahrzeugrelevante Daten und/oder fahrerrelevante Daten.

Weiterhin vorzugsweise ist die Steuereinheit dazu ausgebildet, bei einem Wechsel von dem Anzeigenmodus in den Energiesparmodus die Qualität der Anzeige zu reduzieren und bei dem Wechsel von dem Energiesparmodus in den Anzeigemodus die Qualität der Anzeige zu erhöhen.

Vorzugsweise ist die Anzeigeeinheit als Display, insbesondere als Head-Up-Display ausgebildet. Insbesondere kann das Display Teil eines Kombiinstrumentes sein.

Weitere Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: eine erste Ausgestaltung des Verfahrens,
- FIG 2:: eine zweite Ausgestaltung des Verfahrens,
- FIG 3:: eine erfindungsgemäße Anzeigeeinheit in einem Fahrzeug.

Obwohl die Erfindung im Detail durch die bevorzugten Ausführungsbeispiele näher illustriert und beschrieben wurde, ist die Erfindung nicht durch die offenbarten Beispiele eingeschränkt.

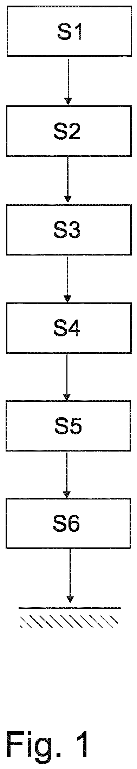

FIG 1 zeigt das erfindungsgemäße Verfahren in einer ersten Ausgestaltung.

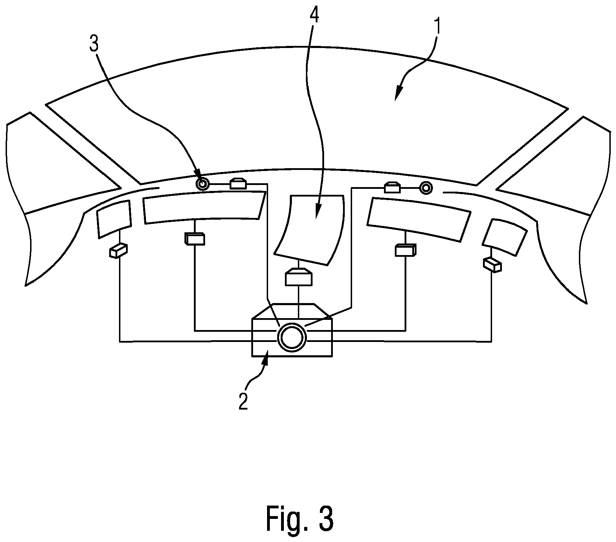

Hier wird in einem ersten Schritt S1 die Blickrichtung des Fahrers ermittelt. Dies wird mithilfe einer Blickerfassungseinrichtung 1 (FIG 3) erreicht, wobei die Blickerfassungseinrichtung 1 (FIG 3) beispielsweise als Frontkamera ausgestaltet ist. Diese Blickerfassungseinrichtung 1 (FIG 3) ist in Höhe des Fahrers beispielsweise am oder im Rückspiegel oder im Bereich der Windschutzscheibe angeordnet und weist in Richtung Fahrer oder ggf. in Richtung Beifahrer. Die Blickerfassungseinrichtung 1 (FIG 3) kann dabei Aufnahmen im sichtbaren Bereich und vorzugsweise im Infrarotbereich erzeugen. Durch die Nutzung von Infrarotstrahlung kann die Blickrichtung auch nachts erfasst werden. Die Blickerfassungseinrichtung 1 (FIG 3) ist mit einer Recheneinheit beispielsweise einem Steuergerät 2 (FIG 3) verbunden, der die Aufnahmen mittel eines Bildauswerteverfahrens analysiert und jeweils eine aktuelle Blickrichtung des Fahrers oder ggf. des Beifahrers bestimmt. Dies wird vorzugsweise anhand der erfassten Pupillen der Augen des Fahrers oder ggf. des Beifahrers bestimmt.

In einem zweiten Schritt S2 wird geprüft, ob die Blickrichtung des Fahrers oder ggf. des Beifahrers auf die Anzeigeeinheit 4 (FIG 3) gerichtet ist.

In einem dritten Schritt S3 wird geprüft, ob verkehrsrelevante Daten vorliegen. Diese können beispielsweise die Verkehrssituation betreffen, beispielsweise ein Stau, welcher über einen Car-to-X oder Car-to-Car Kommunikationskanal ermittelt wird. Auch können dies fahrzeugrelevante Daten sein, wie beispielsweise Ölverlust, Ausfall eines Sicherheitssystems oder eines Systems, Überhitzung eines Systems, zu niedriger Wasserstand etc. sein. Ferner können verkehrsrelevante Daten den Fahrer betreffen und als fahrerrelevante Daten ausgebildet sein. Beispielsweise kann diese eine erhöhte Müdigkeit sein, welche ebenfalls mit der Blickerfassungseinrichtung 1 (FIG 3) ermittelt werden kann. Auch kann dies eine erhöhte Herzfrequenz sein, welche mit entsprechenden Sensoren ermittelt werden kann oder das feststellen von Fahruntauglichkeit anhand eines Fahrstils des Fahrers.

In einem vierten Schritt S4 wird die Anzeigeeinheit 4 (FIG 3) von dem Energiesparmodus in den Anzeigemodus geschaltet, wenn der Fahrer den Blick auf die Anzeigeeinheit 4 (FIG 3) richtet bzw. gerichtet hat und/oder wenn verkehrsrelevante Daten vorliegen. Dabei wird in dem Anzeigemodus die Hintergrundbeleuchtung erhöht, so dass die Anzeige selber erhellt wird. Ferner wird die Qualität der Anzeige erhöht. Als Qualität kann vorzugsweise der Kontrast, die Auflösung und die Aktualisierungsrate der Anzeige verwendet werden. Dabei wird bei der Art der Umschaltung unterschieden: bei einer Blickrichtung auf die Anzeigeeinheit 4 (FIG 3) wird mittels eines Dimmreglers zumindest die Helligkeit stufenlos von dem Energiesparmodus bis zum Anzeigemodus erhöht, während die Anzeigeeinheit 4 (FIG 3) hinsichtlich der Qualität beispielsweise sofort von dem Energiesparmodus in den Anzeigemodus umgeschaltet wird. Somit wird vermieden, dass eine plötzliche Erhellung der Anzeige als "Bewegung" wahrgenommen werden könnte, die eine Aufmerksamkeit hervorruft und somit den Fahrer ggf. vom Verkehrsgeschehen ablenkt.

Es sei darauf hingewiesen, dass auch Ausführungsformen bestehen können in der beide, die Qualität und die Helligkeit, stufenlos oder sofort von dem Energiesparmodus in den Anzeigemodus (und umgekehrt) umgeschaltet werden können.

Bei Vorliegen von verkehrsrelevanten Daten wird ein schlagartiger Wechsel von dem Energiesparmodus in den Anzeigemodus bewerkstelligt. Durch insbesondere die schlagartige Erhöhung der Helligkeit wird die Aufmerksamkeit des Fahrers auf die Anzeigeeinheit 4 (FIG 3) gerichtet, so dass der Fahrer die angezeigten verkehrsrelevanten Daten ablesen bzw. sehen kann. Dies kann in Abhängigkeit von der erfassten Verkehrssituation bewerkstelligt werden. Wird durch von Sensoren aufgenommenen und durch ein Steuergerät 2 (FIG 3) ausgewerteten Sensordaten eine kritische Verkehrssituation erkannt, so kann auf einen schlagartigen Wechsel von dem Energiesparmodus in den Anzeigemodus verzichtet werden.

In einem fünften Schritt S5 wird anhand der Blickerfassungseinrichtung 1 (FIG 3) erkannt, dass der Fahrer seinen Blick von der Anzeigeeinheit 4 (FIG 3) abwendet. Ferner wird festgestellt, dass keine verkehrsrelevanten Daten mehr vorliegen.

In einem sechsten Schritt S6 wird die Anzeigeeinheit 4 (FIG 3) von dem Anzeigemodus in den Energiesparmodus versetzt. Dazu wird die Hintergrundbeleuchtung über den Dimmregler reduziert, so dass die Helligkeit der Anzeige reduziert wird. Ferner wird die Qualität der Anzeige herabgesetzt.

In diesem Energiesparmodus wird die Energie/dem Stromverbrauch und die Abwärme der Anzeigeeinheit 4 (FIG 3) reduziert. Darüber hinaus wird die Anzeigeeinheit 4 (FIG 3) weniger stark erwärmt, welches einen erheblichen Vorteil in Bezug auf eine mögliche Einbauposition der Anzeigeeinheit 4 (FIG 3) mit sich bringt. Diese Anzeigeeinheit 4 (FIG 3) kann nun auch an Positionen eingebaut werden, die einer höheren Sonneneinstrahlung ausgesetzt sind. Des Weiteren wird die Hintergrundbeleuchtung durch gezielte Impulsansteuerung (Überströmung) erhellt. Daher ist ein sogenanntes Derating bei hoher Temperatur erst viel später notwendig.

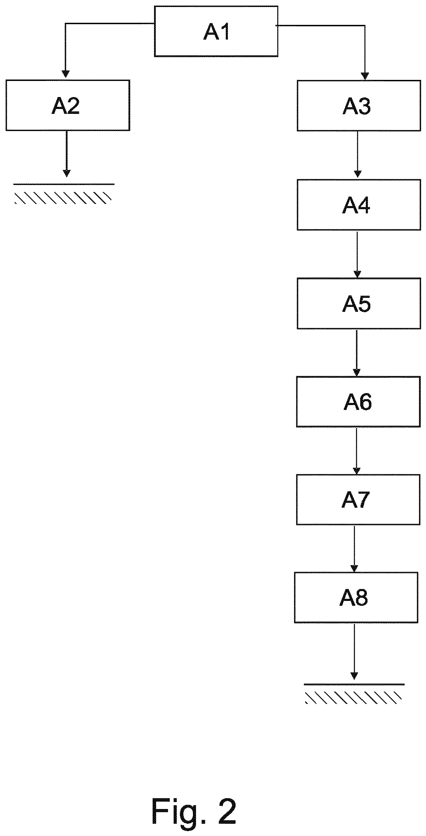

FIG 2 zeigt ein weiteres erfindungsgemäßes Verfahren in einer zweiten Ausgestaltung.

Hier erfolgt in einem ersten Schritt A1 zunächst an den Fahrer eine manuelle Abfrage bzw. Einstellung der Anzeigeeinheit 4 (FIG 3), ob das erfindungsgemäße Verfahren verwendet werden soll. Diese Abfrage kann auch darin liegen, dass der Fahrer die aktuelle Einstellung jeweils beibehält und nur bei einem Änderungswunsch die Anzeigeeinheit 4 (FIG 3) dahingehend umstellt, dass das erfindungsgemäße Verfahren angewendet werden soll. Fährt z.B. der Fahrer alleine, so kann er das Verfahren aktivieren oder aktiviert beibehalten, bei beispielsweise Mitfahrern, wie beispielsweise Kindern kann er es deaktivieren oder nicht aktivieren.

In einem zweiten Schritt A2 wird das Verfahren vom Fahrer deaktiviert bzw. nicht aktiviert und endet somit.

In einem alternativen dritten Schritt A3 wird das Verfahren wie in FIG 1 fortgeführt und die Blickrichtung des Fahrers ermittelt.

In einem vierten Schritt A4 wird geprüft, ob die Blickrichtung des Fahrers auf die Anzeigeeinheit 4 (FIG 3) gerichtet ist.

In einem fünften Schritt A5 wird geprüft, ob verkehrsrelevante Daten vorliegen.

In einem sechsten Schritt A6 wird die Anzeigeeinheit 4 (FIG 3) von dem Energiesparmodus in den Anzeigemodus geschaltet, wenn der Fahrer den Blick auf die Anzeigeeinheit 4 (FIG 3) richtet bzw. gerichtet hat und/oder wenn verkehrsrelevante Daten vorliegen.

In einem siebten Schritt A7 wird anhand der Blickerfassungseinrichtung 1 (FIG 3) erkannt, dass der Fahrer seinen Blick von der Anzeigeeinheit 4 (FIG 3) abwendet. Ferner wird festgestellt, dass keine verkehrsrelevanten Daten mehr vorliegen.

In einem achten Schritt A8 wird die Anzeigeeinheit 4 (FIG 3) von dem Anzeigemodus in den Energiesparmodus versetzt.

FIG 3 zeigt eine erste Ausgestaltung einer erfindungsgemäßen Anzeigeeinheit 4.

Diese weist eine Blickerfassungseinrichtung 1, welche beispielsweise als Frontkamera mit einem Eye-Tracking-Sensor für ein Fahrzeug ausgebildet ist, auf. Die Blickerfassungseinrichtung 1 kann beispielsweise im oder am Rückspiegel montiert sein.

Die Blickerfassungseinrichtung 1 weist bevorzugt eine Schwenkvorrichtung 3 auf, um die Blickerfassungseinrichtung 1 schwenkbar zu befestigen, so dass eine Blickrichtung eines Objektivs der Blickerfassungseinrichtung 1 verändert werden kann.

Das Fahrzeug weist als Steuereinheit ein Steuergerät 2 auf, welches mit der Blickerfassungseinrichtung 1 verbunden ist. Das Steuergerät 2 wertet die Aufnahmen durch die Blickerfassungseinrichtung 1 auf und bewirkt ein Verschwenken der Blickerfassungseinrichtung 1 um die Blickrichtung des Fahrers zu ermitteln.

Das Steuergerät 2 ist zudem mit der Anzeigeeinheit 4 verbunden, um diese anhand der erfassten Daten zu steuern. Das Steuergerät 2 ist ferner mit verschiedenen Kommunikationskanälen und/oder anderen Erfassungssystem zur Erfassung des Umfelds verbunden. Zur Auswertung der Blickrichtung des Fahrers oder ggf des Beifahrers vorliegt, wird vorzugsweise eine Analyseeinheit verwendet. Das Steuergerät 2 kann dabei mehrere einzelne miteinander verbundene Steuergeräte umfassen.

Insbesondere kann die Anzeigeeinheit 4 als Display insbesondere als Head-Up Display ausgebildet sein.

## Patentansprüche

1. Verfahren zum Betreiben einer Anzeigeeinheit (4) eines Fahrzeugs, wobei die Anzeigeeinheit (4) wenigstens eine Anzeige anzeigt, mit folgenden Schritten:
- Ermitteln der Blickrichtung eines Fahrers durch eine Blickerfassungseinrichtung (1),
- Prüfen, ob die Blickrichtung des Fahrers auf die Anzeigeeinheit (4) gerichtet ist,
- Prüfen, ob verkehrsrelevante Daten vorliegen,
- Betreiben der Anzeigeeinheit (4) in einem Energiesparmodus, wenn der Blick des Fahrers nicht auf die Anzeigeeinheit (4) gerichtet ist und wenn keine verkehrsrelevanten Daten vorliegen,
- Betreiben der Anzeigeeinheit (4) in einem Anzeigemodus, wenn der Blick des Fahrers auf die Anzeigeeinheit (4) gerichtet ist und/oder wenn verkehrsrelevante Daten zur Anzeige vorliegen,
wobei bei einem Wechsel von dem Anzeigenmodus in den Energiesparmodus die Helligkeit der Anzeige reduziert wird und bei dem Wechsel von dem Energiesparmodus in den Anzeigemodus die Helligkeit der Anzeige erhöht wird, **dadurch gekennzeichnet, dass**
die Anzeigeeinheit (4) über eine Dimm-Funktion verfügt und der Wechsel von dem Energiesparmodus in den Anzeigemodus mittels der Dimm-Funktion stufenlos erfolgt, wenn sich der Blick des Fahrers auf die Anzeigeeinheit (4) richtet, und dass der Wechsel von dem Energiesparmodus in den Anzeigemodus schlagartig erfolgt, wenn verkehrsrelevante Daten zur Anzeige vorliegen.

2. Verfahren nach Anspruch 1, **dadurch gekennzeichnet, dass** der Wechsel von dem Energiesparmodus in den Anzeigemodus dann nicht schlagartig erfolgt, wenn zwar verkehrsrelevante Daten zur Anzeige vorliegen, diese aber eine kritische Verkehrssituation erkennen lassen, in welchem Fall der Wechsel von dem Energiesparmodus in den Anzeigemodus mittels der Dimm-Funktion stufenlos erfolgt.

3. Verfahren nach Anspruch 1 oder 2, **dadurch gekennzeichnet, dass** die verkehrsrelevanten Daten eine geänderte Verkehrssituation umfassen.

4. Verfahren nach einem der vorhergehenden Ansprüche, **dadurch**
**gekennzeichnet, dass**
die verkehrsrelevanten Daten fahrzeugrelevante Daten umfassen.

5. Verfahren nach einem der vorhergehenden Ansprüche, **dadurch**
**gekennzeichnet, dass**
die verkehrsrelevanten Daten fahrerrelevante Daten umfassen.

6. Verfahren nach einem der vorhergehenden Ansprüche, **dadurch**
**gekennzeichnet, dass**
bei der Anzeigeeinheit (4) bei einem Wechsel von dem Anzeigenmodus in den Energiesparmodus die Qualität der Anzeige reduziert und bei dem Wechsel von dem Energiesparmodus in den Anzeigemodus die Qualität der Anzeige erhöht wird.

7. Verfahren nach Anspruch 6, **dadurch gekennzeichnet, dass**
bei der Anzeigeeinheit (4) bei dem Wechsel von dem Anzeigenmodus in den Energiesparmodus als Qualität die Auflösung der Anzeige reduziert wird und bei dem Wechsel von dem Energiesparmodus in den Anzeigemodus als Qualität die Auflösung der Anzeige erhöht wird.

8. Verfahren nach Anspruch 6 oder 7, **dadurch gekennzeichnet, dass** bei der Anzeigeeinheit (4) bei dem Wechsel von dem Anzeigenmodus in den Energiesparmodus als Qualität die Aktualisierungsrate der Anzeige reduziert wird und bei dem Wechsel von dem Energiesparmodus in den Anzeigemodus als Qualität die Aktualisierungsrate der Anzeige erhöht wird.

9. Verfahren nach Anspruch 6, 7 oder 8, **dadurch gekennzeichnet, dass** bei der Anzeigeeinheit (4) bei dem Wechsel von dem Anzeigenmodus in den Energiesparmodus als Qualität der Kontrast der Anzeige reduziert wird und bei dem Wechsel von dem Energiesparmodus in den Anzeigemodus als Qualität der Kontrast der Anzeige erhöht wird.

10. Anzeigeeinheit (4) für ein Fahrzeug umfassend eine Blickerfassungseinrichtung (1) zum Erfassen der Blickrichtung des Fahrers und eine Steuereinheit zum Prüfen, ob die Blickrichtung des Fahrers auf die Anzeigeeinheit (4) gerichtet ist und ob verkehrsrelevante Daten vorliegen, wobei die Steuereinheit ferner dazu ausgerichtet ist, wenn der Blick des Fahrers nicht auf die Anzeigeeinheit (4) gerichtet ist und wenn keine verkehrsrelevanten Daten vorliegen, die Anzeigeeinheit (4) in einem Energiesparmodus, zu betreiben und die Anzeigeeinheit (4), wenn der Blick des Fahrers auf die Anzeigeeinheit (4) gerichtet ist und/oder wenn verkehrsrelevante Daten zur Anzeige vorliegen, in einem Anzeigemodus zu betreiben,
wobei die Anzeigeeinheit (4) eine Hintergrundbeleuchtungseinheit zur Hintergrundbeleuchtung umfasst, wobei die Steuereinheit dazu ausgebildet ist, bei einem Wechsel von dem Anzeigenmodus in den Energiesparmodus die Helligkeit der Hintergrundbeleuchtung zu reduzieren und bei dem Wechsel von dem Energiesparmodus in den Anzeigemodus die Helligkeit der Hintergrundbeleuchtung zu erhöhen, **dadurch gekennzeichnet, dass**
die Hintergrundbeleuchtungseinheit einen Dimmregler umfasst, wobei die Steuereinheit dazu ausgebildet ist, die Helligkeit der Hintergrundbeleuchtung mittels des Dimmreglers stufenlos zu erhöhen, wenn sich der Blick des Fahrers auf die Anzeigeeinheit (4) richtet, und dass
die Steuereinheit dazu ausgebildet ist, die Helligkeit der Hintergrundbeleuchtung schlagartig zu erhöhen, wenn verkehrsrelevante Daten zur Anzeige vorliegen.

11. Anzeigeeinheit (4) nach Anspruch 10, **dadurch gekennzeichnet, dass** die Steuereinheit dazu ausgebildet ist, bei dem Wechsel von dem Anzeigenmodus in den Energiesparmodus die Qualität der Anzeige zu reduzieren und bei dem Wechsel von dem Energiesparmodus in den Anzeigemodus die Qualität der Anzeige zu erhöhen.

12. Anzeigeeinheit (4) nach Anspruch 10 oder 11, **dadurch**
**gekennzeichnet, dass**
die Anzeigeeinheit (4) als Display insbesondere als Head-Up-Display ausgebildet ist.

## Claims

1. Method for operating a display unit (4) of a vehicle, wherein the display unit (4) displays at least one display, comprising the following steps:
- ascertaining the viewing direction of a driver with a gaze-tracking device (1),
- checking whether the viewing direction of the driver is directed at the display unit (4),
- checking whether traffic-relevant data are present,
- operating the display unit (4) in an energy-saving mode when the view of the driver is not directed at the display unit (4) and when no traffic-relevant data are present,
- operating the display unit (4) in a display mode when the view of the driver is directed at the display unit (4) and/or when traffic-relevant data are present for display,
wherein when changing from the display mode into the energy-saving mode, the brightness of the display is reduced, and when changing from the energy-saving mode into the display mode, the brightness of the display is increased, **characterized in that**
the display unit (4) has a dimming function and the change from the energy-saving mode into the display mode is done smoothly using the dimming function when the view of the driver is directed at the display unit (4), and **in that** the change from the energy-saving mode into the display mode occurs suddenly when traffic-relevant data are present for display.

2. Method according to Claim 1, **characterized in that** the change from the energy-saving mode into the display mode does not occur suddenly when traffic-relevant data are present for display but they reveal a critical traffic situation, in which case the change from the energy-saving mode into the display mode is done smoothly using the dimming function.

3. Method according to Claim 1 or 2, **characterized in that** the traffic-relevant data comprise a changed traffic situation.

4. Method according to any of the preceding claims, **characterized in that** the traffic-relevant data comprise vehicle-relevant data.

5. Method according to any of the preceding claims, **characterized in that** the traffic-relevant data comprise driver-relevant data.

6. Method according to any of the preceding claims, **characterized in that** in the display unit (4), when changing from the display mode into the energy-saving mode, the quality of the display is reduced, and when changing from the energy-saving mode into the display mode, the quality of the display is increased.

7. Method according to Claim 6, **characterized in that**
in the display unit (4), when changing from the display mode into the energy-saving mode, the resolution of the display is reduced as the quality, and when changing from the energy-saving mode into the display mode, the resolution of the display is increased as the quality.

8. Method according to Claim 6 or 7, **characterized in that** in the display unit (4), when changing from the display mode into the energy-saving mode, the refresh rate of the display is reduced as the quality, and when changing from the energy-saving mode into the display mode, the refresh rate of the display is increased as the quality.

9. Method according to Claim 6, 7 or 8, **characterized in that** in the display unit (4), when changing from the display mode into the energy-saving mode, the contrast of the display is reduced as the quality, and when changing from the energy-saving mode into the display mode, the contrast of the display is increased as the quality.

10. Display unit (4) for a vehicle comprising a gaze-tracking device (1) for acquiring the viewing direction of the driver and a control unit for checking whether the viewing direction of the driver is directed at the display unit (4), and whether traffic-relevant data are present, wherein the control unit is furthermore configured such that when the view of the driver is not directed at the display unit (4) and when no traffic-relevant data are present, the display unit (4) is operated in an energy-saving mode, and the display unit (4) is operated in a display mode when the view of the driver is directed at the display unit (4) and/or when traffic-relevant data are present for display,
wherein the display unit (4) comprises a backlight unit for backlighting, wherein the control unit is designed, when changing from the display mode into the energy-saving mode, to reduce the brightness of the backlighting and, when changing from the energy-saving mode into the display mode, to increase the brightness of the backlighting, **characterized in that**
the backlight unit comprises a dimming controller, wherein the control unit is designed to increase the brightness of the backlighting by means of the dimming controller smoothly when the view of the driver is directed at the display unit (4), and **in that**
the control unit is designed to increase the brightness of the backlighting suddenly when traffic-relevant data are present for display.

11. Display unit (4) according to Claim 10, **characterized in that** the control unit is designed, when changing from the display mode into the energy-saving mode, to reduce the quality of the display and, when changing from the energy-saving mode into the display mode, to increase the quality of the display.

12. Display unit (4) according to Claim 10 or 11, **characterized in that** the display unit (4) is designed as a display, in particular as a head-up display.

## Revendications

1. Procédé permettant de faire fonctionner une unité d'affichage (4) d'un véhicule, l'unité d'affichage (4) affichant au moins un affichage, comprenant les étapes suivantes consistant à :
- déterminer la direction de regard d'un conducteur à l'aide d'un dispositif de détection du regard (1),
- vérifier si la direction de regard du conducteur est dirigée vers l'unité d'affichage (4),
- vérifier si des données en rapport avec la circulation sont disponibles,
- faire fonctionner l'unité d'affichage (4) dans un mode d'économie d'énergie lorsque le regard du conducteur n'est pas dirigé vers l'unité d'affichage (4) et lorsqu'aucune donnée en rapport avec la circulation n'est disponible,
- faire fonctionner l'unité d'affichage (4) dans un mode d'affichage lorsque le regard du conducteur est dirigé vers l'unité d'affichage (4) et/ou lorsque des données en rapport avec la circulation sont disponibles pour l'affichage,
dans lequel, lors d'un passage du mode d'affichage au mode d'économie d'énergie, la luminosité de l'affichage est réduite et lors du passage du mode d'économie d'énergie au mode d'affichage, la luminosité de l'affichage est augmentée, **caractérisé en ce que**
l'unité d'affichage (4) possède une fonction de gradation et le passage du mode d'économie d'énergie au mode d'affichage est effectué en continu au moyen de la fonction de gradation lorsque le regard du conducteur est dirigé vers l'unité d'affichage (4), et **en ce que** le passage du mode d'économie d'énergie au mode d'affichage est effectué brusquement lorsque des données en rapport avec la circulation sont disponibles pour l'affichage.

2. Procédé selon la revendication 1, **caractérisé en ce que** le passage du mode d'économie d'énergie au mode d'affichage n'est pas effectué brusquement lorsque des données en rapport avec la circulation sont disponibles pour l'affichage, mais lorsque celles-ci font apparaître une situation de circulation critique, auquel cas le passage du mode d'économie d'énergie au mode d'affichage est effectué en continu au moyen de la fonction de gradation.

3. Procédé selon la revendication 1 ou 2, **caractérisé en ce que**
les données en rapport avec la circulation comprennent une situation de circulation modifiée.

4. Procédé selon l'une des revendications précédentes, **caractérisé en ce que** les données en rapport avec la circulation comprennent des données en rapport avec le véhicule.

5. Procédé selon l'une des revendications précédentes, **caractérisé en ce que** les données en rapport avec la circulation comprennent des données en rapport avec le conducteur.

6. Procédé selon l'une des revendications précédentes, **caractérisé en ce que** dans l'unité d'affichage (4) la qualité de l'affichage est réduite lors du passage du mode d'affichage au mode d'économie d'énergie et la qualité de l'affichage est augmentée lors du passage du mode d'économie d'énergie au mode d'affichage.

7. Procédé selon la revendication 6, **caractérisé en ce que**
dans l'unité d'affichage (4), en tant que qualité, la résolution de l'affichage est réduite lors du passage du mode d'affichage au mode d'économie d'énergie et, en tant que qualité, la résolution de l'affichage est augmentée lors du passage du mode d'économie d'énergie au mode d'affichage.

8. Procédé selon la revendication 6 ou 7, **caractérisé en ce que**, dans l'unité d'affichage (4), la fréquence de mise à jour de l'affichage, en tant que qualité, est réduite lors du passage du mode d'affichage au mode d'économie d'énergie et la fréquence de mise à jour de l'affichage, en tant que qualité, est augmentée lors du passage du mode d'économie d'énergie au mode d'affichage.

9. Procédé selon la revendication 6, 7 ou 8, **caractérisé en ce que**
dans l'unité d'affichage (4), le contraste de l'affichage, en tant que qualité, est réduit lors du passage du mode d'affichage au mode d'économie d'énergie et le contraste de l'affichage, en tant que qualité, est augmenté lors du passage du mode d'économie d'énergie au mode d'affichage.

10. Unité d'affichage (4) destinée à un véhicule comprenant un dispositif de détection du regard (1) destiné à détecter la direction de regard du conducteur et une unité de commande destinée à vérifier si la direction de regard du conducteur est dirigée vers l'unité d'affichage (4) et si des données en rapport avec la circulation sont disponibles, l'unité de commande étant en outre conçue, lorsque le regard du conducteur n'est pas dirigé vers l'unité d'affichage (4) et lorsqu'aucune donnée en rapport avec la circulation n'est disponible, pour faire fonctionner l'unité d'affichage (4) dans un mode d'économie d'énergie et, lorsque le regard du conducteur est dirigé vers l'unité d'affichage (4) et/ou lorsque des données en rapport avec la circulation sont disponibles pour l'affichage, pour faire fonctionner l'unité d'affichage (4) dans un mode d'affichage,
l'unité d'affichage (4) comprenant une unité de rétroéclairage destinée au rétroéclairage, l'unité de commande étant conçue pour réduire la luminosité du rétroéclairage lors d'un passage du mode d'affichage au mode d'économie d'énergie et pour augmenter la luminosité du rétroéclairage lors du passage du mode d'économie d'énergie au mode d'affichage, **caractérisée en ce que** l'unité de rétroéclairage comprend un régulateur de gradation, l'unité de commande étant conçue pour augmenter progressivement la luminosité du rétroéclairage au moyen du régulateur de gradation lorsque le regard du conducteur est dirigé vers l'unité d'affichage (4), et **en ce que**
l'unité de commande est conçue pour augmenter brusquement la luminosité du rétroéclairage lorsque des données en rapport avec la circulation sont disponibles pour l'affichage.

11. Unité d'affichage (4) selon la revendication 10, **caractérisée en ce que** l'unité de commande est conçue pour réduire la qualité de l'affichage lors du passage du mode d'affichage au mode d'économie d'énergie et pour augmenter la qualité de l'affichage lors du passage du mode d'économie d'énergie au mode d'affichage.

12. Unité d'affichage (4) selon la revendication 10 ou 11, **caractérisée en ce que**
l'unité d'affichage (4) est réalisée sous la forme d'un écran, en particulier d'un affichage tête haute.
